# EUROPÄISCHE PATENTSCHRIFT

(11) **EP 3 045 324 B1**
(45) Veröffentlichungstag und Bekanntmachung des Hinweises auf die Patenterteilung: **23.10.2019**
(21) Anmeldenummer: 16151546.5
(22) Anmeldetag: 15.01.2016
(51) Int. Cl.: B60C 5/02, B60C 5/12, B60C 5/14, B60C 9/00, B60C 15/02, B60C 15/00

(54) **FAHRRADREIFEN**
BICYCLE TYRE
ROUE DE VELO

(30) Priorität: 16.01.2015 DE 202015000366 U
(43) Veröffentlichungstag der Anmeldung: 20.07.2016
(73) Patentinhaber: Ralf Bohle GmbH, 51580 Reichshof (DE)
(72) Erfinder: Krischio, Peter, 57489 Drolshagen (DE)
(74) Vertreter: Patentanwälte Ruff, Wilhelm, Beier, Dauster & Partner mbB

(56) Entgegenhaltungen:
- DE-A1- 4 135 838
- DE-A1- 10 002 411
- DE-A1- 19 909 648
- DE-U1-202012 007 834
- JP-A- 2010 173 501

## Beschreibung

Die Erfindung betrifft einen Fahrradreifen mit einer Reifenkarkasse mit zwei gegenüberliegenden Seitenwänden, wobei die Reifenkarkasse wenigstens abschnittsweise einen Reifeninnenraum definiert und wobei an den freien Enden der Seitenwände jeweils ein Wulst mit einem daran angeordneten Wulstkern angeordnet ist.

Aus der japanischen Patentzusammenfassung JP 2010-173501 ist ein Fahrradreifen mit einer Reifenkarkasse mit zwei gegenüberliegenden Seitenwänden bekannt, wobei die Reifenkarkasse wenigstens abschnittsweise einen Reifeninnenraum definiert und wobei an den freien Enden der Seitenwände jeweils einen Wulst mit einem darin angeordneten Wulstkern angeordnet ist. Eine dem Reifeninnenraum zugewandte Innenseite der Reifenkarkasse ist mit zwei kreuzweise zueinander angeordneten Lagen aus jeweils mehreren, parallel zueinander angeordneten monofilen Fäden bedeckt. Die monofilen Fäden weisen jeweils einen ovalen Querschnitt auf und sind in ein elastisches Material eingebettet. Die monofilen Fäden können aus Nylon bestehen. Die beiden Gewebelagen sind aufeinander angeordnet und bilden in Folge dessen kein Gewebe.

Aus der deutschen Offenlegungsschrift DE 41 35 838 A1 ist ein Fahrradreifen mit einer Reifenkarkasse mit zwei gegenüberliegenden Seitenwänden bekannt, wobei die Reifenkarkasse wenigstens abschnittsweise einen Reifeninnenraum definiert und wobei an den freien Enden der Seitenwände jeweils einen Wulst mit einem darin angeordneten Wulstkern angeordnet ist. Eine dem Reifeninnenraum zugewandte Innenseite der Reifenkarkasse kann mit einer gasdichten Innenlage ausgestattet sein, die vorzugsweise aus Butylkautschuk besteht.

Aus der deutschen Gebrauchsmusterschrift DE 20 2012 007 834 U1 ist ein Fahrradreifen bekannt, bei dem die Reifenkarkasse von der Innenseite des Fahrradreifens her um die Wulstkerne geschlagen ist und die umgeschlagenen Abschnitte nicht überlappen.

Aus der deutschen Offenlegungsschrift DE 100 02 411 A1 ist ein Fahrradreifen bekannt, dessen Gewebekarkasse unmittelbar mit einer luftdichten Gummimischung auf Butylbasis beschichtet ist.

Aus der deutschen Offenlegungsschrift DE 199 09 648 A1 ist ein Fahrradreifen bekannt, bei dem die Reifenkarkasse von der Innenseite des Fahrradreifens her um die Wulstkerne geschlagen ist. Die umgeschlagenen Abschnitte überlappen im Bereich unterhalb der Lauffläche.

Mit der Erfindung soll ein Fahrradreifen hinsichtlich seiner Verwendung ohne Schlauch, also eine sogenannte Tubeless-Verwendung, verbessert werden.

Erfindungsgemäß ist bei einem Fahrradreifen mit einer Reifenkarkasse mit zwei gegenüberliegenden Seitenwänden, wobei die Reifenkarkasse wenigstens abschnittsweise einen Reifeninnenraum definiert und wobei an den freien Enden der Seitenwände jeweils ein Wulst mit einem daran angeordneten Wulstkern angeordnet ist, vorgesehen, dass eine dem Reifeninnenraum zugewandte Innenseite der Reifenkarkasse mit einer Gewebelage bedeckt ist, die aus monofilen Fäden mit im wesentlichen kreisrundem Querschnitt besteht, die in ein elastisches Material eingebettet sind oder bei denen die Zwischenräume zwischen den Fäden mit elastischem Material aufgefüllt sind, wobei das Gewebe der Gewebelage Kettfäden und Schussfäden mit einer Fadendichte zwischen 15 tpi und 30 tpi (threads per inch, Fäden pro Zoll) aufweist.

Durch Anordnung einer Gewebelage auf der dem Reifeninnenraum zugewandten Innenseite der Reifenkarkasse lässt sich eine Luftdichtheit des Reifens auch bei vergleichsweise hohen Drücken erzielen, wenn diese Gewebelage in ein elastisches Material eingebettet ist. Das Vorsehen einer Gewebelage mit Fäden, die in ein elastisches Material eingebettet sind, kann dabei nicht nur eine Luftdichtheit auch bei hohen Drücken sicherstellen, sondern ermöglicht es auch, den erfindungsgemäßen Fahrradreifen mit vergleichsweise geringem Gewicht auszuführen. Während bei herkömmlichen Tubeless-Reifen die Innenseite der Reifenkarkasse mit einer sehr dicken Abdichtschicht aus elastischem Material versehen ist, die sehr schwer ist, genügt es gemäß der Erfindung überraschenderweise, eine dünne und damit leichte Gewebelage, deren Fäden in ein elastisches Material eingebettet sind, auf der Innenseite der Reifenkarkasse aufzubringen, um deren Luftdichtheit sicherzustellen. Unter Luftdichtheit wird dabei keine 100%ige Luftdichtheit verstanden. Der erfindungsgemäße Fahrradreifen kann zusätzlich mit einer Dichtmilch, beispielsweise einer Latex-Dichtmilch, verwendet werden, die in den Innenraum des Reifens eingebracht wird und die möglicherweise verbleibende kleine Lecks des Fahrradreifens automatisch verschließt. Die Gewebelage besteht aus monofilen Fäden. Es hat sich herausgestellt, dass auch ein sehr dünnes Gewebe aus monofilen Fäden die Anforderungen in Bezug auf die Luftdichtheit der Gewebelage erfüllt, selbst wenn das Gewebe so dünn ist wie die Fäden selbst. Durch die dünne, monofile Gewebelage auf der Innenseite der Reifenkarkasse wird das Handling und die Montage eines Fahrradreifens gegenüber einem konventionellen Tubeless-Reifen mit einer dicken Gummi-Innenlage deutlich verbessert. Der erfindungsgemäße Fahrradreifen ist deutlich einfacher zu montieren. Ein bei konventionellen Tubeless-Reifen übliche Gummi-Innenlage muss mindestens 0,6 bis 0,9 mm dick sein, um produktionstechnisch vernünftig handhabbar zu sein. Bei dem erfindungsgemäßen Fahrradreifen kann die monofile Gewebelage dünner als 0,5 bis 0,6 mm ausgebildet sein, da sie einfacher zu verarbeiten ist. Gegenüber konventionellen Tubeless-Reifen lässt sich mit dem erfindungsgemäßen Fahrradreifen daher eine erhebliche Gewichtseinsparung erreichen.

Die Verwendung von monofilen Fäden mit im wesentlichen kreisrundem Querschnitt erleichtert die Herstellung der Gewebelage, da diese dann auf konventionellen Webmaschinen hergestellt werden kann. Darüber hinaus sind monofile Fäden mit im wesentlichen kreisrundem Querschnitt aus verschiedensten Materialien leicht erhältlich. Die Fadendichte der Kettfäden und Schussfäden der Gewebelage wird zwischen 15 tpi und 30 tpi gewählt. Die Einheit "tpi" oder "threads per inch" ist im Reifenbau üblich und gibt die Anzahl der Kettfäden bzw. Schussfäden pro Zoll an. Werden beispielsweise 25 Kettfäden pro Zoll und 25 Schussfäden pro Zoll eingesetzt, wird von einer Fadendichte von 25 x 25 tpi gesprochen. Ein Zoll entspricht dabei 25,4 mm. 10 tpi entsprechen infolgedessen 0,3937 Fäden pro Millimeter. Ein Bereich von 15 tpi bis 30 tpi entspricht somit einem Bereich von 0,5906 Fäden pro Millimeter bis 1,1811 Fäden pro Millimeter. Der Querschnitt der monofilen Fäden kann von einer Kreisform beispielsweise durch Fertigungstoleranzen, Lagerung oder dergleichen abweichen. Abgesehen von solchen unbeabsichtigten Abweichungen soll der Querschnitt der monofilen Fäden aber grundsätzlich kreisförmig sein.

In Weiterbildung der Erfindung ist die Gewebelage bis zu einem Druck in einem Bereich zwischen 0,5 bar und 10 bar im Wesentlichen luftundurchlässig ausgebildet.

Eine solche Ausbildung der Gewebelage ermöglicht es, den erfindungsgemäßen Fahrradreifen auch als Rennradreifen zu verwenden. Bei Rennradreifen werden vergleichsweise schmale Reifen von beispielsweise 18 mm bis 28 mm Breite verwendet, die dann auf einen hohen Druck zwischen 4,5 bar und bis zu 10 bar aufgepumpt werden. Gleichzeitig ist bei Rennradreifen gefordert, dass diese sehr leicht sind. Der erfindungsgemäße Aufbau eines Fahrradreifens ermöglicht es, alle diese geforderten Eigenschaften zu erfüllen. Die Erfindung kann aber auch ohne weiteres für andere Reifenbreiten Anwendung finden.

In Weiterbildung der Erfindung bedeckt die Gewebelage die Wülste und bedeckt auf einer Außenseite der Reifenkarkasse einen Bereich, in dem im montierten Zustand des Reifens die Außenseite der Reifenkarkasse an der jeweiligen Innenseite der Felgenhörner anliegt.

Auf diese Weise wird der bei schlauchlosen oder Tubeless-Reifen in der Regel kritische Außenbereiche der Wülste mit einer zusätzlichen, als Dichtung wirkenden Schicht versehen. Dadurch kann sichergestellt werden, dass der Bereich, in dem die Reifenwülste an der Innenseite der Felgenhörner anliegen, zuverlässig abgedichtet ist. Die Gewebelage kann dabei unmittelbar an der Oberkante des Felgenhorns enden. Es ist beispielsweise aber auch möglich, die Gewebelage weiter nach oben zu ziehen, sogar bis in den Bereich des Laufstreifens des Reifens. Auf diese Weise kann die Gewebelage auf der Außenseite für einen Schutz der Reifenkarkasse sorgen. Gleichzeitig wird durch ein Anbringen der Gewebelage auch auf der Außenseite der Reifenkarkasse deren Luftdichtheit noch einmal wesentlich verbessert.

Beispielsweise besteht die Gewebelage aus einem Kreuzgewebe.

In Weiterbildung der Erfindung weist das Kreuzgewebe eine Fadendichte der Schussfäden von 15 bis 30 tpi (Fäden pro Zoll; threads per inch) und eine Fadendichte der Kettfäden zwischen 15 bis 30 tpi (Fäden pro Zoll; threads per inch) auf.

Versuche der Erfinder haben ergeben, dass eine solche Fadendichte des Kreuzgewebes die geforderten Eigenschaften für die Verwendung in einem für die Tubeless- oder schlauchlose Verwendung vorgesehenen Fahrradreifen erfüllt.

Beispielsweise ist die Fadendichte des Kreuzgewebes 25 tpi x 25 tpi.

In Weiterbildung der Erfindung sind die Fäden der Gewebelage in Gummi oder vorzugsweise Butylgummi eingebettet oder nur die Zwischenräume zwischen den Fäden sind mit Gummi oder Butylgummi ausgefüllt.

Auf diese Weise lässt sich bei geringem Gewicht eine ausreichende Luftdichtheit der Gewebelage erreichen.

In Weiterbildung der Erfindung sind bei einem Kreuzgewebe die Fäden der Gewebelage in einem Winkel von jeweils 45°, insbesondere 40° bis 50°, zur Umfangsrichtung des Reifens angeordnet.

In Weiterbildung der Erfindung ist das Gewebe der Gewebelage anders ausgebildet als das Gewebe der Reifenkarkasse.

Das Gewebe der Gewebelage kann auf die Luftdichtheit hin optimiert werden. Dahingegen wird das Gewebe der Reifenkarkasse auf die Fahreigenschaften des Reifens hin optimiert.

In Weiterbildung der Erfindung sind die Wulstkerne aus sehr zugfesten und hochmodulen Fasern, insbesondere Zylonfasern, Carbonfasern oder Aramidfasern, ausgebildet.

Es hat sich herausgestellt, dass die Verwendung mehrerer sehr zugfester und hochmoduler Fasern in den Wulstkernen die Verwendung des erfindungsgemäßen Fahrradreifens als schlauchloser oder Tubeless-Reifen erleichtert. Als Zylonfasern werden Fasern aus Zylon bezeichnet, die beispielsweise ein Gewicht von 3.270 dtex und einen Elastizitätsmodul von 28.000 N/mm² aufweisen. Zylon ist ein Markenname und bezeichnet Poly(p-phenylen-2,6-benzobisoxazol).

In Weiterbildung der Erfindung bestehen die Wulstkerne aus mehreren Fasern, wobei jeweils einige Fasern ein Garn bilden und wobei mehrere Garne ineinander gewickelt und miteinander verklebt sind.

Durch Verkleben der sehr zugfesten und hochmodulen Fasern beziehungsweise Garne werden die gewünschten Eigenschaften der Wulstkerne erreicht und gleichzeitig wird gegenüber der Einbettung der Fasern in elastisches Material Gewicht gespart.

In Weiterbildung der Erfindung weist die Reifenkarkasse multifile Karkassfäden auf.

In Weiterbildung der Erfindung weist die Reifenkarkasse eine Fadendichte von 40 bis 150 tpi, insbesondere 127 tpi, auf.

In Weiterbildung der Erfindung besteht die Reifenkarkasse aus gummiertem Nyloncordgewebe.

In Weiterbildung der Erfindung weist die Reifenkarkasse ein Gewebe auf, das um beide Wulstkerne umgeschlagen und wieder bis in den Bereich der Lauffläche geführt ist, so dass die Reifenkarkasse im Querschnitt im Bereich der Seitenwände aus wenigstens zwei parallel zueinander angeordneten Gewebelagen gebildet ist. Im Bereich der Lauffläche liegen dann drei Gewebelagen parallel zueinander.

Ein solcher Aufbau der Reifenkarkasse wird auch als French-Former-Aufbau bezeichnet und ist insbesondere für Rennradreifen sehr gut geeignet.

Alternativ kann die Reifenkarkasse von der Innenseite des Fahrradreifens her um die Wulstkerne geschlagen sein, wobei die umgeschlagenen Abschnitte nicht überlappen.

Das Umschlagen der Reifenkarkasse von der Innenseite des Fahrradreifens her um die Wulstkerne wird als sogenannte Turn-up-Konstruktion bezeichnet. Indem die dann umgeschlagenen Abschnitte der Reifenkarkasse nicht überlappen, infolgedessen also unterhalb der Lauffläche nicht überlappt sind, wird eine sehr flexible Konstruktion der Reifenkarkasse erzielt. Die umgeschlagenen Abschnitte können dabei noch vor der Lauffläche enden. Beispielsweise wird die Reifenkarkasse von der Innenseite her um die Wulstkerne geschlagen, wobei die umgeschlagenen Abschnitte dann jeweils in einem Abstand von der Lauffläche enden. Die Gewebelage aus monofilen Fäden bedeckt bei einer solchen Konstruktion hingegen die vollständige Innenseite des Reifens und wird um die Wulstkerne geschlagen und bildet die Außenseite des Reifens und ist bis unter die Lauffläche geführt. Vorteilhafterweise enden die umgeschlagenen Abschnitte der Gewebelage aus monofilen Fäden aber bereits kurz hinter dem Rand der Lauffläche. Auf diese Weise wird eine sehr flexible und sehr leichte Reifenkonstruktion für einen Rennradreifen erreicht.

In Weiterbildung der Erfindung ist die Reifenkarkasse als Kreuzgewebe mit einer Fadendichte von 40 tpi x 40 tpi ausgebildet.

Eine solche Ausbildung der Reifenkarkasse erlaubt eine sehr flexible und sehr leichte Reifenkonstruktion. Beispielsweise ist das Kreuzgewebe als Nylonkreuzgewebe ausgebildet. Eine Ausbildung der Reifenkarkasse als Kreuzgewebe mit einer Fadendichte von 40 tpi x 40 tpi hat insbesondere in Verbindung mit der sogenannten Turn-up-Konstruktion sehr gute Ergebnisse gezeigt.

In Weiterbildung der Erfindung ist eine Anordnung mit einer Felge und einem erfindungsgemäßen Fahrradreifen vorgesehen, wobei die Felge mit einem relativ zur Felge abgedichteten Ventil versehen ist, über das Luft in den Reifeninnenraum gepumpt werden kann, der einerseits von der Felge und andererseits von der Reifenkarkasse begrenzt ist, wobei der Reifeninnenraum auf einen Druck zwischen 0,5 bar und 10 bar aufgepumpt ist.

In Weiterbildung der Erfindung ist in dem Reifeninnenraum eine Dichtmilch angeordnet.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine schematische Darstellung eines Querschnitts durch eine Anordnung mit einer Felge und einem erfindungsgemäßen Fahrradreifen,
- Fig. 2: eine schematische Darstellung eines erfindungsgemäßen Fahrradreifens gemäß einer weiteren Ausführungsform während des Herstellungsprozesses,
- Fig. 3: eine schematische, abschnittsweise Darstellung des Fahrradreifens der Fig. 2 im fertiggestellten Zustand und
- Fig. 4: eine schematische Darstellung eines erfindungsgemäßen Fahrradreifens gemäß einer weiteren Ausführungsform während des Herstellungsprozesses.

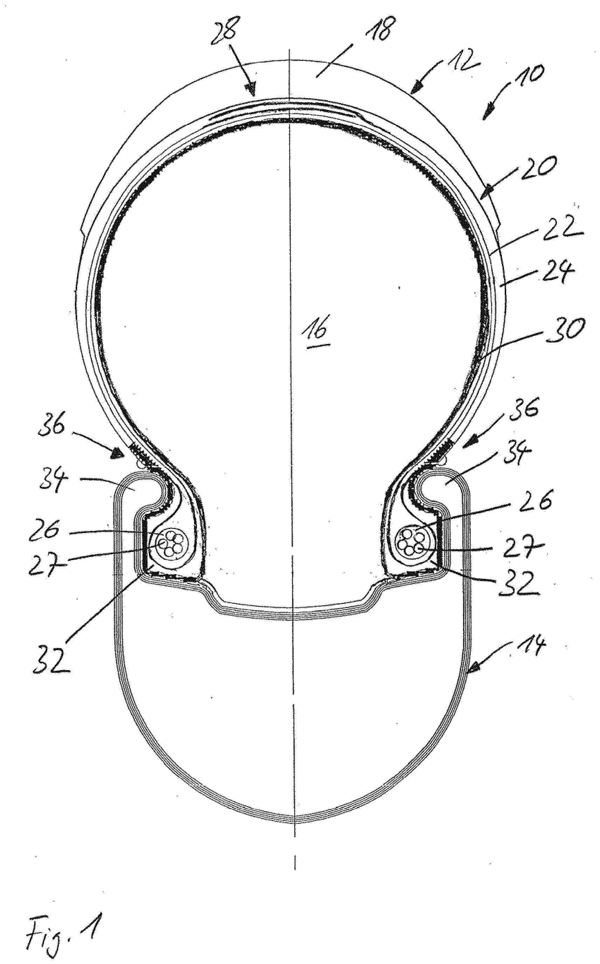

In Figur 1 ist eine Schnittansicht durch eine erfindungsgemäße Anordnung 10 mit einem Fahrradreifen 12 und einer Felge 14 dargestellt. Über ein nicht dargestelltes Ventil wird ein Reifeninnenraum 16 mit Luft befüllt. Wie der Figur zu entnehmen ist, ist der Reifeninnenraum 16 unten durch die Felge 14 und oben durch den Fahrradreifen 12 begrenzt. Der Fahrradreifen 12 wird als schlauchloser oder Tubeless-Reifen verwendet. Dies heißt, dass in dem Reifeninnenraum 16 kein zusätzlicher Schlauch angeordnet wird. Vielmehr ist das nicht dargestellte Ventil gegenüber der Felge 14 abgedichtet, so dass die Luft über das Ventil unmittelbar in den Reifeninnenraum 16 gepumpt werden kann. Der dargestellte Fahrradreifen 12 ist als Rennradreifen ausgebildet und wird auf einen Druck zwischen 4,5 bar und 10 bar aufgepumpt.

Der Fahrradreifen 12 weist einen Laufstreifen 18 auf, der im Betrieb des Reifens 12 mit einer Fahrbahnoberfläche in Kontakt steht. Der Laufstreifen 18 ist sichelartig ausgebildet und verringert seine Dicke zu den beiden Seitenflanken des Fahrradreifens 12 hin. Der Fahrradreifen 12 weist darüber hinaus eine Reifenkarkasse 20 auf. Die Reifenkarkasse 20 besteht aus einem gummierten Cordgewebe, also einem Cordgewebe 22, das in ein elastisches Material 24, beispielsweise Gummi oder Butylgummi, eingebettet ist. Die Darstellung in Fig. 1 ist lediglich schematisch und tatsächlich weist die Schicht 24 in der Realität eine verschwindende Dicke auf, da lediglich das gummierte Cordgewebe 22 die Karkasse 20 bildet. Das Cordgewebe 22 erstreckt sich zwischen zwei Wulstkernen 26, ist um 180° um die Wulstkerne 26 umgeschlagen und wird dann wieder bis zum Scheitel des Fahrradreifens 12 geführt, wo die beiden Enden des Cordgewebes in einem Bereich 28 überlappen. Eine solche Konstruktion der Reifenkarkasse 20 wird auch als French-Former-Konstruktion bezeichnet und hat sich gerade für Rennradreifen bewährt. Im Bereich von den Wulstkernen 26 bis zum Bereich 28, in dem sich das Cordgewebe überlappt, liegen somit von außen nach innen immer zwei Lagen des Cordgewebes übereinander, im Bereich 28 unter der Lauffläche sogar drei Lagen. In der Realität liegen die in Fig. 1 dargestellten Lagen des Cordgewebes 22 und die Gewebelage 30 unmittelbar aufeinander. Lediglich der Übersichtlichkeit halber sind diese in Fig. 1 beabstandet voneinander dargestellt.

Um den Fahrradreifen 12 als schlauchlosen oder Tubeless-Reifen verwenden zu können, ist auf der Innenseite der Reifenkarkasse, die dem Reifeninnenraum 16 zugewandt ist, eine Gewebelage 30 angeordnet. Diese Gewebelage 30 bedeckt die vollständige Innenseite der Reifenkarkasse 20. Die Gewebelage 30 besteht aus monofilen Fäden, die in ein elastisches Material, beispielsweise Gummi oder Butylgummi, eingebettet sind, so dass zumindest die Zwischenräume zwischen den Fäden ausgefüllt sind. Die Gewebelage 30 ist um die Reifenwülste 32 herumgeschlagen, so dass die Gewebelage 30 auch auf den Außenseiten der Reifenwülste 32 angeordnet ist, die im aufgepumpten Zustand des Fahrradreifens 12, der in der Figur dargestellt ist, an den Innenseiten der Felgenhörner 34 anliegen. Auch in diesem, für die Luftdichtheit der Anordnung 10 kritischen Bereich, sorgt die Gewebelage 30 dadurch für eine sichere Abdichtung zwischen der Felge 14 und dem Fahrradreifen 12. Die Gewebelage ist bei dem Reifen 12 noch ein Stück weit über das obere Ende der Felgenhörner 34 hinausgeführt. Die Gewebelage 30 kann aber in einem Bereich 36 enden, also unmittelbar auf Höhe der Oberkante der Felgenhörner 34. Wird die Gewebelage 30 weiter nach oben geführt und beispielsweise bis in den Bereich des Laufstreifens 18, kann die Gewebelage 30 für einen zusätzlichen Schutz der Reifenkarkasse 20 gegen Beschädigungen von außen sorgen. Darüber hinaus wird auch die Luftdichtheit des Fahrradreifens 12 noch weiter verbessert.

Die Reifenkarkasse des dargestellten Fahrradreifens 12 besteht aus einem Cordgewebe mit einer Fadendichte von 127 tpi (Fäden pro Zoll; threads per inch). Die Nylonfäden der Reifenkarkasse sind als multifile Karkassfäden ausgebildet. Materialalternativen sind möglich.

Die Gewebelage 30 besteht aus einem Kreuzgewebe, das sowohl bei den Schussfäden als auch den Kettfäden eine Fadendichte von 25 tpi (Fäden pro Zoll; threads per inch) aufweist. Die Gewebelage 30 besteht aus monofilen Fäden. Verwendet werden können beispielsweise monofile Nylonfäden oder andere monofile Fäden, beispielsweise Polyesterfäden.

Die Fäden der Gewebelage 30 sind vorzugsweise in einem Winkel von +45° beziehungsweise -45° zur Umfangsrichtung des Reifens angeordnet. Die Gewebelage 30 ist sehr dünn ausgebildet und die Darstellung der Fig. 1 gibt die Dickenverhältnisse nicht korrekt wieder.

Aufgrund der unterschiedlichen Fadendichten der Gewebelage 30 und des Gewebes 22 der Reifenkarkasse 20 ist das Kreuzgewebe der Gewebelage 30 anders ausgebildet als das Gewebe 22 der Reifenkarkasse. Es ist dadurch möglich, die Gewebelage 30 hinsichtlich einer Luftdichtheit zu optimieren, die Reifenkarkasse 20 kann mittels des Gewebes 22 hingegen auf die Fahreigenschaften des Fahrradreifens 12 hin optimiert werden. Im Rahmen der Erfindung kann für die Gewebelage 30 beispielsweise auch ein Cordgewebe verwendet werden.

Die Wulstkerne 26 bestehen aus mehreren Garnen 27 oder Strängen aus sehr zugfesten und hochmodulen Fasern. In der Figur sind in jedem Wulstkern fünf Garne 27 oder Stränge dargestellt, diese Anzahl kann jedoch sowohl unterschritten als auch deutlich überschritten werden und ist lediglich beispielhaft zu verstehen. Die einzelnen Garne 27 oder Stränge in den Wulstkernen 26 bestehen beispielsweise aus Zylonfasern, Carbonfasern oder Aramidfasern und sind miteinander verwickelt, beispielsweise verdrillt, und verklebt. Dadurch kann gegenüber Wulstkernen, die aus mehreren, in elastisches Material eingebetteten Garnen bestehen, Gewicht eingespart werden und die Dehnbarkeit der Wulstkerne wird reduziert. Der Sitz des Reifens auf der Felge wird ebenfalls verbessert.

Im Fahrbetrieb kann die erfindungsgemäße Anordnung 10 zusammen mit einer Dichtmilch benutzt werden, beispielsweise eine Latex-Dichtmilch, die über das nicht dargestellte Ventil in den Reifeninnenraum 16 eingebracht werden kann und sich im Fahrbetrieb der Anordnung 10 auf der gesamten Innenseite der Gewebelage 30 sowie dem Abschnitt der Felge, der den Reifeninnenraum 16 begrenzt, verteilt und dadurch noch vorhandene kleinere Lecks abdichtet.

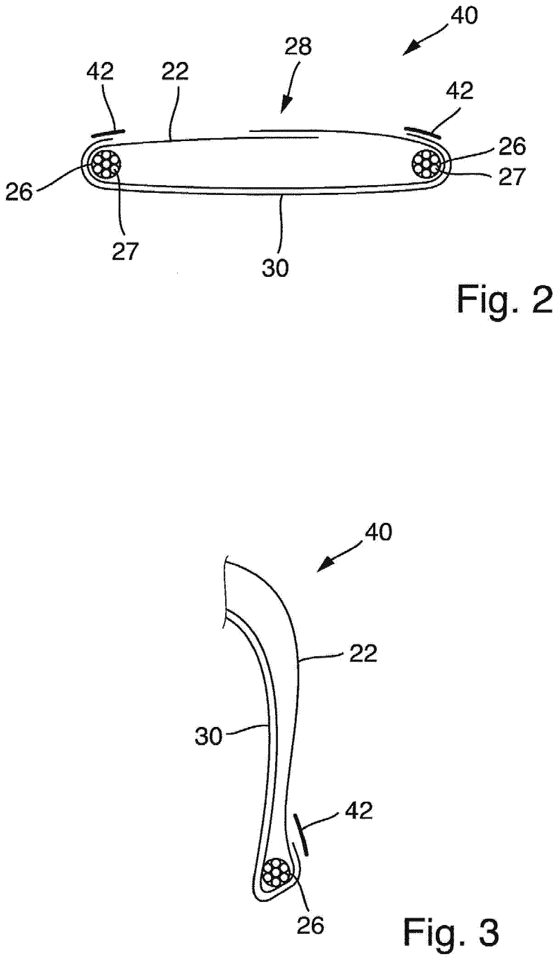

Die schematische Darstellung der Fig. 2 zeigt einen weiteren erfindungsgemäßen Fahrradreifen 40 während des Herstellungsprozesses. Zu erkennen sind die beiden Wulstkerne 26 mit mehreren Garnen 27 aus sehr zugfesten Fasern. Um diese beiden Wulstkerne 26 ist das gummierte Nyloncordgewebe geschlagen, das sich in dem Bereich 28 überlappt. Ebenfalls zu erkennen ist die Gewebelage 30 aus monofilen Fäden, die ebenfalls um die Wulstkerne 26 herumgelegt ist, aber in Fig. 2 etwa oberhalb der Wulstkerne endet. Die beiden Enden der Gewebelage 30 werden jeweils von einem Gewebestreifen 42 überlappt. Die Gewebestreifen 42 erstrecken sich damit ein Stück weiter in Richtung des Überlappungsbereichs 28 als die Gewebelage 30. Die beiden Gewebestreifen 42 bestehen aus demselben Gewebe wie die Gewebelage 30, also aus einem Gewebe aus monofilen Fäden, das in elastisches Material eingebettet ist oder bei dem die Zwischenräume zwischen den Fäden mit elastischem Material aufgefüllt sind. Auch die Gewebestreifen 42 sind damit luftdicht ausgebildet.

Ausgehend vom Zustand der Fig. 2 wird der Fahrradreifen 40 in eine Form gelegt und anschließend vulkanisiert, so dass er die in Fig. 1 dargestellte, bekannte Form eines Fahrradreifens erhält. Bei diesem Vorgang des Auflegens auf eine Form oder des Einlegens in eine Form und dem anschließenden Vulkanisieren treten Toleranzen auf, die u.a. auch die relative Positionierung der einzelnen Elemente verändern. Die Gewebestreifen 42 werden daher aufgelegt, um sicherzustellen, dass auch in dem Bereich der Innenseiten der Felgenhörner 34 eine Gewebelage aus luftdichtem Material vorhanden ist. Im fertiggestellten Zustand des Fahrradreifens 40 liegen die Gewebestreifen 42 somit an der Innenseite der Felgenhörner 34 an und erstrecken sich bis zu dem Bereich 36, also bis zur Oberkante der Felgenhörner, siehe Fig. 1. Dadurch kann sichergestellt werden, selbst wenn die Gewebelage 30 beim Aufbringen auf eine Form und beim anschließenden Vulkanisieren verrutscht, dass die Innenseite der Felgenhörner 34 mit einer luftdichten Gewebelage bedeckt ist und somit eine zuverlässige Abdichtung des Fahrradreifens 40 auf einer Felge sicherstellt. Auch dienen die Gewebestreifen 42 dazu, einen eventuell ungleichmäßigen Verlauf der Kanten der Gewebelage 30 zu kaschieren.

Die Darstellung der Fig. 3 zeigt schematisch und abschnittsweise den Fahrradreifen im fertiggestellten Zustand. Der Übersichtlichkeit halber sind der Laufstreifen sowie auch Bereiche aus elastischem Material weggelassen. Zu erkennen ist, dass die Gewebelage 30 im fertiggestellten Zustand um den Wulstkern 26 umgeschlagen ist. Der Gewebestreifen 42 liegt dann in einem Bereich etwas oberhalb des Wulstkerns 26 auf der Außenseite der Karkasse auf und überlappt dabei das Ende der Gewebelage 30. Die Überlappung kann beispielsweise 2 bis 3 mm betragen.

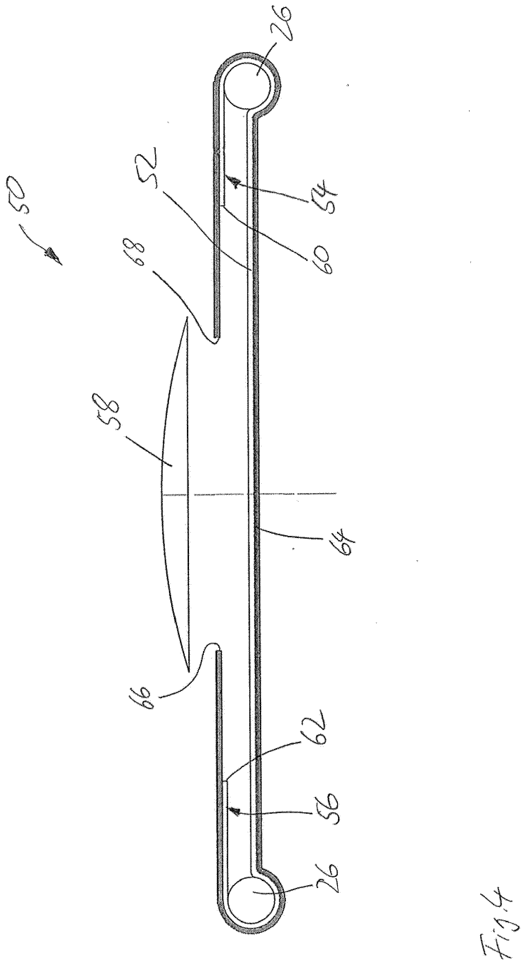

Fig. 4 zeigt schematisch einen weiteren erfindungsgemäßen Fahrradreifen 50 während des Herstellungsprozesses. Zu erkennen sind wieder die beiden Wulstkerne 26, die wie bei dem Fahrradreifen der Fig. 2 mehrere Garne aus sehr zugfesten Fasern aufweisen, wobei dies nicht erneut erläutert wird. Um diese beiden Wulstkerne 26 ist das Karkassengewebe 52 der Reifenkarkasse geschlagen, beispielsweise ein Nylonkreuzgewebe. Das Karkassengewebe 52 kann als Nylonkreuzgewebe mit einer Fadendichte von 40 x 40 tpi ausgebildet sein. Sowohl Kettfäden als auch Schussfäden weisen also eine Fadendichte von 40 tpi auf. Die in Fig. 4 um die Wulstkerne nach oben umgeschlagenen Abschnitte 54 und 56 des Karkassengewebes 52 enden aber vor einem Laufflächenstreifen 58, der am fertiggestellten Reifen die Lauffläche bildet. Dadurch weisen die Längskanten 60, 62 der umgeschlagenen Abschnitte des Karkassengewebes 52 einen Abstand voneinander auf. Im Unterschied zu der Reifenkonstruktion der Fig. 2 überlappen sich die umgeschlagenen Abschnitte 54, 56 des Karkassengewebes 52 somit nicht unterhalb des Laufflächenstreifens 58. Dadurch wird ein sehr flexibler und leichter Reifen erreicht. Die in Fig. 4 dargestellte Konstruktion eines Reifens wird auch als Turn-up-Konstruktion bezeichnet.

Die Innenseite des Karkassengewebes 52 ist mit einer Gewebelage 64 aus monofilen Fäden bedeckt, die gleich wie die Gewebelage 30 der Fig. 2 ausgebildet sein kann. Auch das Gewebe 64 wird um die Wulstkerne 26 nach oben umgeschlagen, wobei die Längskanten 66, 68 der umgeschlagenen Abschnitte des Gewebes 64 unterhalb des Laufstreifens 58 enden. Die Längskanten 66, 68 weisen aber einen Abstand zueinander auf und enden kurz hinter dem rechten bzw. linken Rand des Laufstreifens 58. Dadurch wird ein sehr flexibler, leichter und dennoch zuverlässig luftdichter Aufbau für einen Rennradreifen erreicht.

## Patentansprüche

1. Fahrradreifen mit einer Reifenkarkasse (20) mit zwei gegenüberliegenden Seitenwänden, wobei die Reifenkarkasse (20) wenigstens abschnittsweise einen Reifeninnenraum definiert und wobei an den freien Enden der Seitenwände jeweils ein Wulst (32) mit einem darin angeordneten Wulstkern (26) angeordnet ist, **dadurch gekennzeichnet, dass** eine dem Reifeninnenraum zugewandte Innenseite der Reifenkarkasse (20) mit einer Gewebelage (30; 64) bedeckt ist, die aus monofilen Fäden mit im wesentlichen kreisrundem Querschnitt besteht, die in ein elastisches Material eingebettet sind oder bei denen die Zwischenräume mit elastischem Material ausgefüllt sind, wobei das Gewebe der Gewebelage (30; 64) Kettfäden und Schussfäden mit einer Fadendichte zwischen 15 tpi und 30 tpi aufweist.

2. Fahrradreifen nach Anspruch 1, **dadurch gekennzeichnet, dass** die Gewebelage (30; 64) bis zu einem Druck in einem Bereich zwischen 0,5 bar und 10 bar im Wesentlichen luftundurchlässig ausgebildet ist.

3. Fahrradreifen nach Anspruch 1 oder 2, **dadurch gekennzeichnet, dass** das Gewebe der Gewebelage (30; 64) als Kreuzgewebe mit Kettfäden und Schussfäden mit einer Fadendichte von jeweils 25 tpi ausgebildet ist.

4. Fahrradreifen nach einem der vorstehenden Ansprüche, **dadurch gekennzeichnet, dass** die Gewebelage (30; 64) die Wülste (32) bedeckt und auf einer Außenseite der Reifenkarkasse (20) einen Bereich überdeckt, in dem im montierten Zustand des Reifens die Außenseite der Reifenkarkasse (20) an der jeweiligen Innenseite der Felgenhörner anliegt.

5. Fahrradreifen nach wenigstens einem der vorstehenden Ansprüche, **dadurch gekennzeichnet, dass** die Fäden der Gewebelage (30; 64) in Gummi oder Butylgummi eingebettet sind oder die Zwischenräume zwischen den Fäden sind mit Gummi oder Butylgummi ausgefüllt.

6. Fahrradreifen nach einem der vorstehenden Ansprüche, **dadurch gekennzeichnet, dass** die Fäden der Gewebelage (30; 64) in einem Winkel von jeweils 45°, insbesondere 40° bis 50°, zur Umfangsrichtung des Reifens angeordnet sind.

7. Fahrradreifen nach wenigstens einem der vorstehenden Ansprüche, **dadurch gekennzeichnet, dass** die Wulstkerne (26) aus sehr zugfesten und hochmodulen Fasern, insbesondere Zylonfasern, Carbonfasern oder Aramidfasern, ausgebildet sind.

8. Fahrradreifen nach Anspruch 7, **dadurch gekennzeichnet, dass** die Wulstkerne (26) aus mehreren Fasern bestehen, wobei jeweils mehrere Fasern ein Garn (27) bilden und wobei mehrere Garne (27) umeinander gewickelt und miteinander verklebt sind.

9. Fahrradreifen nach wenigstens einem der vorstehenden Ansprüche, **dadurch gekennzeichnet, dass** die Reifenkarkasse (20) multifile Karkassfäden aufweist.

10. Fahrradreifen nach wenigstens einem der vorstehenden Ansprüche, **dadurch gekennzeichnet, dass** die Reifenkarkasse (20) einen Fadendichte von 40 bis 150 tpi, insbesondere 127 tpi, aufweist.

11. Fahrradreifen nach wenigstens einem der vorstehenden Ansprüche, **dadurch gekennzeichnet, dass** die Reifenkarkasse (20) aus einem gummierten Nyloncordgewebe besteht.

12. Fahrradreifen nach wenigstens einem der vorstehenden Ansprüche, **dadurch gekennzeichnet, dass** die Reifenkarkasse (20) von der Innenseite des Fahrradreifens her um die Wulstkerne (26) geschlagen ist und die umgeschlagenen Abschnitte nicht überlappen.

13. Fahrradreifen nach wenigstens einem der vorstehenden Ansprüche, **dadurch gekennzeichnet, dass** die Reifenkarkasse (20) als Kreuzgewebe mit einer Fadendichte von 40 tpi x 40 tpi ausgebildet ist.

14. Anordnung (10) mit einer Felge (14) und einem Fahrradreifen (12) nach wenigstens einem der vorstehenden Ansprüche, **dadurch gekennzeichnet, dass** die Felge (14) mit einem relativ zur Felge (14) abgedichteten Ventil versehen ist, über das Luft in einerseits von der Felge (14) und andererseits der Reifenkarkasse (20) begrenzter Reifeninnenraum gepumpt werden kann, wobei der Reifeninnenraum auf einen Druck zwischen 0,5 bar und 10 bar aufgepumpt ist.

15. Anordnung nach Anspruch 14, **dadurch gekennzeichnet, dass** in dem Reifeninnenraum eine Dichtmilch angeordnet ist.

## Claims

1. Bicycle tyre having a tyre carcass (20) with two opposite side walls, wherein the tyre carcass (20) at least in sections defines a tyre interior space and wherein on each of the free ends of the side walls a bead (32) with a bead core (26) disposed therein is arranged, **characterized in that** an interior side of the tyre carcass (20) facing the tyre interior space is covered by a fabric layer (30; 64) which is composed of monofilament fibres having an essentially circular cross section, which fibres are embedded in an elastic material or which have the interstices filled with elastic material, wherein the fabric of the fabric layer (30; 64) includes warp threads and weft threads with a thread density between 15 tpi and 30 tpi.

2. Bicycle tyre according to claim 1, **characterized in that** the fabric layer (30; 64) is essentially impermeable to air up to a pressure in a range between 0.5 bar and 10 bar.

3. Bicycle tyre according to claim 1 or 2, **characterized in that** the fabric of the fabric layer (30; 64) is a canvas fabric composed of warp threads and weft threads each with a thread density of 25 tpi.

4. Bicycle tyre according to any of the preceding claims, **characterized in that** the fabric layer (30; 64) covers the beads (32) and covers over a region on an exterior side of the tyre carcass (20) on which, in the mounted condition of the tyre, the exterior side of the tyre carcass (20) rests on the respective interior side of the rim flanges.

5. Bicycle tyre according to at least one of the preceding claims, **characterized in that** the threads of the fabric layer (30; 64) are embedded in rubber or butyl rubber, or the interstices between the threads are filled with rubber or butyl rubber.

6. Bicycle tyre according to any of the preceding claims, **characterized in that** the threads of the fabric layer (30; 64) are arranged at an angle of in each case 45°, in particular 40° to 50°, in relation to the circumferential direction of the tyre.

7. Bicycle tyre according to at least one of the preceding claims, **characterized in that** the bead cores (26) are composed of very high tensile strength and high-modulus fibres, in particular Zylon fibres, carbon fibres or aramid fibres.

8. Bicycle tyre according to claim 7, **characterized in that** the bead cores (26) are composed of multiple fibres, wherein in each case multiple fibres form a yarn (27) and wherein multiple yarns (27) are wound around each other and are adhesively bonded to each other.

9. Bicycle tyre according to at least one of the preceding claims, **characterized in that** the tyre carcass (20) has multifilament carcass threads.

10. Bicycle tyre according to at least one of the preceding claims, **characterized in that** the tyre carcass (20) has a thread density of 40 to 150 tpi, in particular 127 tpi.

11. Bicycle tyre according to at least one of the preceding claims, **characterized in that** the tyre carcass (20) is composed of a rubberized nylon cord fabric.

12. Bicycle tyre according to at least one of the preceding claims, **characterized in that** the tyre carcass (20) is folded from the interior side of the bicycle tyre about the bead cores (26) and the folded sections do not overlap.

13. Bicycle tyre according to at least one of the preceding claims, **characterized in that** the tyre carcass (20) is a canvas fabric with a thread density of 40 tpi x 40 tpi.

14. Assembly (10) comprising a rim (14) and a bicycle tyre (12) according to at least one of the preceding claims, **characterized in that** the rim (14) is provided with a valve sealed in relation to the rim (14), via said valve air can be pumped into a tyre interior space delimited on the one side by the rim (14) and on the other side by the tyre carcass (20), wherein the tyre interior space is pumped up to a pressure between 0.5 bar and 10 bar.

15. Assembly according to claim 14, **characterized in that** a liquid sealing means is disposed in the tyre interior space.

## Revendications

1. Pneu de vélo comprenant une carcasse de pneu (20) avec deux parois latérales opposées, la carcasse de pneu (20) définissant au moins en partie un espace intérieur du pneu et un talon (32) avec une tringle (26) disposée à l'intérieur de celui-ci étant à chaque fois disposé au niveau des extrémités libres des parois latérales, **caractérisé en ce qu'**un côté intérieur de la carcasse de pneu (20) tourné vers l'espace intérieur du pneu est revêtu d'une couche de tissu (30 ; 64), qui se compose de fils monofilaments de section transversale essentiellement circulaire qui sont noyés dans un matériau élastique ou dans lesquels les espaces intermédiaires sont remplis de matériau élastique, le tissu de la couche de tissu (30 ; 64) présentant des fils de chaîne et des fils de trame avec une densité de fils comprise entre 15 tpi et 30 tpi.

2. Pneu de vélo selon la revendication 1, **caractérisé en ce que** la couche de tissu (30 ; 64) est réalisée de manière essentiellement imperméable à l'air jusqu'à une pression dans une plage comprise entre 0,5 bar et 10 bars.

3. Pneu de vélo selon la revendication 1 ou 2, **caractérisé en ce que** le tissu de la couche de tissu (30 ; 64) est réalisé sous forme de tissu croisé avec des fils de chaîne et des fils de trame ayant une densité de fils de 25 tpi dans chaque cas.

4. Pneu de vélo selon l'une quelconque des revendications précédentes, **caractérisé en ce que** la couche de tissu (30 ; 64) couvre les talons (32) et, sur un côté extérieur de la carcasse de pneu (20), recouvre une région dans laquelle, dans l'état monté du pneu, le côté extérieur de la carcasse de pneu (20) s'applique contre le côté intérieur respectif des rebords de jante.

5. Pneu de vélo selon au moins l'une quelconque des revendications précédentes, **caractérisé en ce que** les fils de la couche de tissu (30 ; 64) sont noyés dans du caoutchouc ou du caoutchouc butyle ou les espaces intermédiaires entre les fils sont remplis de caoutchouc ou de caoutchouc butyle.

6. Pneu de vélo selon l'une quelconque des revendications précédentes, **caractérisé en ce que** les fils de la couche de tissu (30 ; 64) sont à chaque fois disposés suivant un angle de 45°, en particulier de 40° à 50°, par rapport à la direction périphérique du pneu.

7. Pneu de vélo selon au moins l'une quelconque des revendications précédentes, **caractérisé en ce que** les tringles (26) sont réalisées à partir de fibres très résistantes à la traction et de module élevé, en particulier des fibres de Zylon, des fibres de carbone ou des fibres d'aramide.

8. Pneu de vélo selon la revendication 7, **caractérisé en ce que** les tringles (26) se composent de plusieurs fibres, à chaque fois plusieurs fibres formant un brin (27) et à chaque fois plusieurs brins (27) étant enroulés les uns autour des autres et collés les uns aux autres.

9. Pneu de vélo selon au moins l'une quelconque des revendications précédentes, **caractérisé en ce que** la carcasse de pneu (20) présente des fils de carcasse multifilaments.

10. Pneu de vélo selon au moins l'une quelconque des revendications précédentes, **caractérisé en ce que** la carcasse de pneu (20) présente une densité de fils de 40 à 150 tpi, en particulier de 127 tpi.

11. Pneu de vélo selon au moins l'une quelconque des revendications précédentes, **caractérisé en ce que** la carcasse de pneu (20) se compose d'un tissu d'armatures en nylon caoutchoutées.

12. Pneu de vélo selon au moins l'une quelconque des revendications précédentes, **caractérisé en ce que** la carcasse de pneu (20) est retournée depuis le côté intérieur du pneu de vélo autour des tringles (26) et les parties retournées ne se chevauchent pas.

13. Pneu de vélo selon au moins l'une quelconque des revendications précédentes, **caractérisé en ce que** la carcasse de pneu (20) est réalisée sous forme de tissu croisé avec une densité de fils de 40 tpi x 40 tpi.

14. Agencement (10) comprenant une jante (14) et un pneu de vélo (12) selon au moins l'une quelconque des revendications précédentes, **caractérisé en ce que** la jante (14) est pourvue d'une valve étanchéifiée par rapport à la jante (14), par le biais de laquelle de l'air peut être pompé dans un espace intérieur du pneu limité d'une part par la jante (14) et d'autre part par la carcasse de pneu (20), l'espace intérieur du pneu étant pompé à une pression comprise entre 0,5 bar et 10 bars.

15. Agencement selon la revendication 14, **caractérisé en ce qu'**un liquide anti-crevaison est disposé dans l'espace intérieur du pneu.
